**Europäisches Patentamt**

**European Patent Office**

**Office européen des brevets**

(11) Veröffentlichungsnummer: **0 289 764**
**A2**

## (12) EUROPÄISCHE PATENTANMELDUNG

(21) Anmeldenummer: 88104585.0

(22) Anmeldetag: 22.03.88

(51) Int. Cl.⁴: **B29C 67/22 , F25D 23/06**

(30) Priorität: 07.04.87 DE 3711654

(43) Veröffentlichungstag der Anmeldung:
09.11.88 Patentblatt 88/45

(84) Benannte Vertragsstaaten:
AT DE ES FR GB IT SE

(71) Anmelder: **LIEBHERR-HAUSGERÄTE GMBH**

**D-7955 Ochsenhausen(DE)**

(72) Erfinder: **Harsch, Anton, Dipl.-Ing.**
**Im Grund 26**
**D-7955 Ochsenhausen(DE)**
Erfinder: **Forster, Karl**
**Panoramaweg 19**
**D-7955 Erlenmoos(DE)**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Philipps**
**- Dr. P.B. Schäuble Dr. S. Jackermeier -**
**Dipl.-Ing. A. Zinnecker**
**Widenmayerstrasse 23 D-8000 München**
**22(DE)**

(54) **Verfahren zum Ausschäumen des glockenförmigen Hohlraums zwischen Behälteraussen- u. Behälterinnenwandungen o.dgl., vorzugsweise des Hohlraums zwischen den Innenwandungen und den Ausenwandungen von Kühl- und/oder Gefriergeräten.**

(57) Ein Verfahren dient zum Ausschäume des Hohlraums in den Wänden von wannenförmigen Behältern, der zwischen Behälteraußen-und Behälterinnenwandungen gebildet ist, vorzugsweise des Holraums zwischen den Innenwandungen und den Außenwandungen von Kühl-und/oder Gefriergeräten, mit einem Kunststoffschaum, vorzugsweise Polyrethanschaum. Die Innenwandung wird auf den Kern eines Formkastens gestülpt, die Außenwandungen in den Formkasten eingelegt und zueinander und zu der Innenwandung ausgerichtet. Der Formkasten wird dann geschlossen. Die Komponenten des auschäumenden Kunststoffs werden durch mindestens eine verschließbare Öffnung in den äußeren Wandungsteilen in den Hohlraum eingespritzt. Der sich bildende Schaum wird ausgehärtet. Damit sich der Hohlraum gleichmäßiger, d.h. mit gewünschter Mindestrohdichte des Schaumkunststoffes und unter weitgehender Vermeidung von Lunkern, ausschäumen läßt, wird vor dem Schließen des Formkastens in den Hohlraum zwischen die Innen-und Außenwandungen ein ventilartiges Verteilerstück (1), aus dessen Austrittsspalten (6) die gemischten Komponente des Schaumkunststoffs mit im wesentlichen laminarer Strömung austreten, derart eingelegt, daß es mit seiner Rückweite auf der Innenwandung abgestützt ist und mit seinem Einfüllteil in einer Öffnung im mittleren Bereich der plattenförmigen äußeren Rückwandung liegt. Der Formkasten wird vor dem Einfüllen der Komponenten des ausschäumenden Kunststoffs so gewendet, daß die Rückwandung mit dem Einfüllteil unten liegt und der Kunststoffschaum nach seiner Ausbreitung über den etwa horizontal liegenden Hohlraum der Rückwand sich aufsteigend auch über die Hohlräume der Seitenwände ausbildet.

**FIG.1**

## Verfahren zum Ausschäumen des Hohlraums in den Wänden von wannenförmigen Behältern, vorzugsweise von Kühl-und/oder Gefriergeräten

Die Erfindung betrifft ein Verfahren zum Ausschäumen des Hohlraums in den Wandungen von wannenförmigen Behältern, der zwischen Behälteraußen-und Behälterinnenwandungen gebildet ist, vorzugsweise des Hohlraums zwischen den Innenwandungen und den Außenwandungen von Kühl-und/oder Gefriergeräten, mit einem Kunststoffschaum, vorzugsweise Polyurethanschaum, bei dem die Innenwandung auf den Kern eines Formkastens gestülpt wird, die Außenwandungen in den Formkasten eingelegt und zueinander und zu der Innenwandung ausgerichtet werden und der Formkasten geschlossen wird und bei dem die Komponenten des Kunststoffschaums durch mindestens eine verschließbare Öffnung in den äußeren Wandungsteilen in den Hohlraum eingespritzt und der sich bildende Schaum ausgehärtet wird.

Gegenwärtig werden Kühlschrankgehäuse in der Weise hergestellt, daß die aus Kunststoffplatinen tiefgezogenen Innenbehälter glockenförmig auf einen Kern gestülpt werden. Anschließend werden mit entsprechender Vorfixierung die äußeren Wandungsteile, von denen die Seitenteile aus Blech und die Rückwand aus mit Aluminium kaschiertem Karton besteht, in die noch geöffnete Form eingegeben. Anschließend wird die Form geschlossen und in ein Loch oder mehrere Löcher, die im Bereich des Randes der äußeren Wandung vorgesehen sind, wird sodann der ausschäumende Kunststoff eingegeben. Der Schaumkunststoff besteht aus Polyurethanschaum, so daß als Komponenten, die unmittelbar vor dem Einspritzen vermischt werden, Polyol und Isocyanat eingespritzt werden. Die Löcher werden anschließend verschlossen und zum Aushärten fährt die Form mit den auszuschäumenden Wandungsteilen durch einen Ofen. Statt der Erwärmung in einem Ofen ist auch eine andere Art der Beheizung möglich.

Nach dem gegenwärtig ausgeführten Verfahren sind die Wandungsteile glockenförmig in der Form gehalten. Die später durch eine Tür zu schließende Öffnungsseite des Gehäuses weist also nach unten. Diese Art der Ausschäumung hat den Nachteil, daß die schäumenden Kunststoffmassen sehr große Wege von der Eingabestelle zurücklegen müssen, so daß die Bildung von Lunkern kaum zu vermeiden ist. Wegen der unterschiedlich langen Fließwege und Hindernisse in dem Hohlraum können sich neben den Lunkern auch Inhomogenitäten in Bezug auf die Raumdichte der Schaumkunststoffmasse einstellen, weil die Fließwiderstände unterschiedlich sind. Um eine Mindestrohdichte zu erreichen, wird gegenwärtig mit einer gewissen Überschußmenge an Kunststoff gearbeitet. Trotz dieser Überschußmenge lassen sich aber Inhomogenitäten und Lunker nicht vermeiden. Zusätzliche, die Homogenität des Schaumkunststoffes behindernde Widerstände ergeben sich dann, wenn sich in dem auszuschäumenden Hohlraum auch der Verdampfer befindet.

Der nach den bekannten Verfahren unsymmetrisch von einer Seite in den Hohlraum eingespritzte Kunststoff weist üblicherweise eine turbulente Strömung auf, weil die Komponenten des Schaumkunststoffes unmittelbar vor oder bei dem Einspritzen vermischt werden. Aus dieser turbulenten Strömung können sich insbesondere dann Spritzer oder Teile lösen, wenn der eingespritzte Strahl auf Wände oder Einbauten trifft und von diesen abgelenkt oder zerteilt wird. Diese Spritzer fangen dann an zu schäumen und es bilden sich einzelne Schauminseln aus, die zusätzliche Hindernisse bilden und den Fluß des Schaumkunststoffes bei seiner Verteilung behindern, so daß die Bildung von Lunkern die Folge sein kann.

Die Lunkerbildung wird insbesondere dadurch begünstigt, daß der Hohlraum bzw. die Hohlräume nicht schnell genug entlüftet werden können. Bei dem Einspritzen des Schaumkunststoffes nach den bekannten Verfahren ergibt sich der unerwünschte Nebeneffekt, daß das in den gemischten Kunststoffkomponenten vorhandene Treibmittel, das aus Fluorkohlenwasserstoffen besteht, aus der Masse teilweise austritt und neben der vorhandenen Luft ein Gaspolster oberhalb des aufsteigenden Schaumkunststoffes bildet, das anschließend ausgetrieben und verdrängt werden muß. Der Austritt von unnötig großen Mengen von Fluorkohlenwasserstoffen in die Atmosphäre sollte vermieden werden. Zusätzlich müssen zur besseren Entlüftung in die Kartonrückwand Löcher eingeschlagen werden, die anschließend in aufwendiger Weise wieder abgedichtet werden müssen, damit nicht Feuchtigkeit von außen eindringen kann, die das Porenvolumen des Schaumkunststoffes füllt und dadurch die wärmeisolierenden Eigenschaften des Schaumkunststoffs beeinträchtigt und aufhebt.

Aufgabe der Erfindung ist es daher, ein Verfahren der eingangs angegebenen Art zu schaffen, nach dem sich der Hohlraum gleich mäßiger, d.h. mit gewünschter Mindestrohdichte des Schaumkunststoffes und unter weitgehender Vermeidung von Lunkern ausschäumen läßt.

Erfindungsgemäß wird diese Aufgabe bei einem Verfahren der gattungsgemäßen Art dadurch gelöst, daß vor dem Schließen des Formkastens in den Hohlraum zwischen die Innen-und Außenwandungen ein ventilartiges Verteilerstück, aus dessen Austrittsspalten die gemischten Komponenten des Schaumkunststoffes mit im wesentlichen laminarer Strömung austreten, derart eingelegt wird, daß es mit seiner Rückseite auf der Innenwandung abgestützt ist und mit seinem Einfüllteil in einer Öffnung im mittleren Bereich der plattenförmigen äußeren Rückwandung liegt, und daß der Formkasten vor dem Einfüllen der Komponenten des ausschäumenden Kunststoffs so gewendet wird, daß die Rückwandung mit dem Einfüllteil unten liegt und der Kunststoffschaum nach seiner Ausbreitung über den etwa horizontal liegenden Hohlraum der Rückwand sich aufsteigend über die Hohlräume der Seitenwände ausbildet.

Nach dem erfindungsgemäßen Verfahren erfolgt die Ausfüllung des Hohlraums des in der Form gehalterten Gehäuses in umgekehrter Glockenlage, also in einer Lage, in der sich die Öffnungsseite des Gehäuses oben befindet. Diese Lage hat den Vorteil, daß sich der Schaum auf der großflächigen unteren Rückwand gut verteilen und dadurch auch besser entwickeln kann. Die Kartonrückwand ist auf entsprechenden Abwinkelungen der Seitenwände abgestützt, so daß der Randbereich der Kartonrückwand abdichtend gegen diese Abwinkelungen gedrückt wird und Schaum in unerwünschtem Umfang nicht austreten kann. Der Schaum kann anschließend in den Hohlräumen der Seitenwandungen des Gehäuses gleichmäßig aufsteigen, wobei zweckmäßigerweise in die Kantenbereiche der einander überlappenden Teile der Wandungen Schaumfolienteile eingelegt sind, die der Entlüftung dienen.

Nach dem erfindungsgemäßen Verfahren läßt sich eine große Menge gut durchmischter Komponenten des Schaumkunststoffes in kurzer Zeit an einer Stelle des auszuschäumenden Hohlraums einbringen, von der aus dieser zur Füllung des Hohlraums im wesentlichen gleich lange Fließwege zurückzulegen hat. Der Schaumkunststoff breitet sich dabei mit im wesentlichen laminarer Strömung aus, so daß aus der Strömung keine Partikel abreißen können, die störende Schauminseln bilden.

Durch den vergleichmäßigten Schaumfluß wird gleichmäßig auch eine verbesserte Rohdichte des Schaumkunststoffes erreicht. Lunker werden weitgehend vermieden, weil die Hohlräume zwischen den Seitenwandungen gleichmäßig mit dem aufsteigenden Schaum gefüllt werden, der die Luft langsam verdrängt, die aus den durch eingelegte Schaumstreifen geschlossene Fugen entweichen kann. Nach dem erfindungsgemäßen Verfahren ausgeschäumte Gehäuse benötigen nur eine relativ geringe Nachbearbeitung.

Wesentliches Element der Erfindung ist ein ventilartiges Verteilerstück, durch das nach dem erfindungsgemäßen Verfahren die vermischten Komponenten des ausschäumenden Kunststoffs in den Hohlraum zwischen den inneren und äußeren Gehäusewandungen eingespritzt werden.

Eine erste Ausführungsform dieses ventilartigen Verteilerstücks, für das selbständiger Schutz beansprucht wird, zeichnet sich erfindungsgemäß durch eine napfförmige Mischkammer mit tellerförmigem Dichtungsrand aus, die in ihrem Randbereich unterhalb des Dichtungsrandes mit mehreren über den Umfang ihrer Wandung verteilten Austrittsschlitzen versehen ist. Durch ihren tellerförmigen Rand stützt sich das Verteilerstück auf der inneren Wandung beispielsweise der Kartonrückwand ab und ist gegen diese abgedichtet. Die Austrittsschlitze verteilen die gemischten Komponenten des Schaumkunststoffs in die gewünschten Richtungen, wobei durch die Ausgestaltung und Anordnung der Schlitze Vorzugsrichtungen vorgegeben werden können.

Zweckmäßigerweise sind die Austrittsschlitze auf der Außenseite der Wandung der Mischkammer durch im wesentlichen radiale Leitplatten begrenzt und zwischen diesen durch radiale Stege voneinander getrennt, die im auf die Mischkammer bezogenen Radialschnitt sich dreiecksförmig erweiternde Austrittsdüsen begrenzen. Die Größe und Richtung dieser Düsen, in deren Grund sich die Austrittsschlitze befinden, wird durch die in die einzelnen Richtungen aufzugebenden Schaumstoffmassen bestimmt.

Zweckmäßigerweise sind die Leitplatten parallel zueinander angeordnet. Die Leitplatten können rechteckig oder quadratisch ausgebildet sein, wobei die die Düsen unterteilenden Stege auf deren Diagonalen zwischen diesen verlaufen.

Entsprechend den in die einzelnen Richtungen aufzugebenden Kunststoffmassen können die Umfangsschlitze unterschiedliche Breiten und/oder Längen aufweisen.

Zweckmäßigerweise ist der Dichtungsrand des Verteilerstücks nach außen gewölbt oder er weist die Form eines flachen Konus auf, so daß er sich elastisch mit besserer Abdichtung an die Rückwand anschmiegen kann.

Die Mischkammer selbst ist zweckmäßigerweise zylindrisch ausgebildet.

In weiterer Ausgestaltung der Erfindung ist vorgesehen, daß die Öffnungsseite der Mischkammer im Abstand von einem stegartigen Rand umgeben ist, in den eine Dichtungsscheibe aus elastomerem Material mit einem mittleren Schlitz oder Kreuzschlitz gehaltert ist. Die gemischte ausschäumende Zweikomponenten-Kunststoffmasse wird durch den Spritzkopf durch diesen Schlitz oder Schlitze eingespritzt, die in gewisser Weise zusätzlich die Wirkung eines Rückschlagventils haben.

Die Dichtungsscheibe selbst kann im Querschnitt etwa hutförmig ausgebildet sein.

In weiterer Ausgestaltung der Erfindung ist vorgesehen, daß der stegartige Rand in einer Vertiefung liegt und/oder im Abstand mit einem weiteren stegartigen Rand umgeben ist, die der Halterung einer Zentrierplatte dienen, die auf ihrer einen Seite mit einem zu den Vertiefung und/oder dem Rand im wesentlichen komplementären Paßstück und auf ihrer anderen Seite mit einer dem Düsenteil des Mischkopfes angepaßten Ausnehmung mit zentraler, mit der Mischkammer fluchtender Durchtrittsöffnung versehen ist, die von einer trichterförmigen Verbreiterung umgeben ist. Die Zentrierplatte wird nach dem Schließen der Form in den angeklappten Formteilen gehaltert und zentriert und verschiebt dabei das ventilartige Verteilerstück, die sich formschlüssig miteinander verbinden, in die richtige Lage. Wird anschließend der Mischkopf zum Einspritzen der ausschäumenden Zweikomponenten-Kunststoffmasse in die Zentrierplatte eingeführt, zentriert sich dieser selbst in der trichterartigen Verbreiterung. Da der Mischkopf - schwenkbar gelagert werden kann, werden dadurch Lageungenauigkeiten in einfacher Weise ausgeglichen.

Zweckmäßigerweise ist die Zentrierplatte auf ihrer Außenseite innerhalb des Paßstückes mit einer Aussparung zur Aufnahme der Dichtscheibe versehen. Wird also die Zentrierplatte auf das ventilartige Verteilerstück aufgesetzt, werden beide relativ zueinander durch die Dichtungsscheibe abgedichtet.

Zweckmäßigerweise weist die Zentrierplatte abgeschrägte oder abgerundete Außenseiten auf. Beispielsweise kann sie einen sechseckigen Querschnitt haben. Die Schrägflächen dienen dann der Zentrierung in den Wandungen der Form.

In weiterer Ausgestaltung der Erfindung ist vorgesehen, daß ein ringförmiges Schaumkunststoffteil mit zentraler Ausnehmung auf die Außenseite der Mischkamer des Ventilstücks aufgeschoben ist, wobei die Dicke des Schaumkunststoffteils größer ist als die Höhe des die Rückseite des Verteilerstücks überrrangenden Teils der Mischkammer. Über dieses Schaumkunststoffteil kann sich dann das Verteilerstück elastisch auf der Innenwandung oder einem eingelegten Verdampfer abstützen, ohne daß Beschädigungen zu befürchten wären.

Zweckmäßigerweise bestehen das Verteilerstück und/oder die Zentrierplatte aus einem Kunststoffspritzgußteil.

Das erfindungsgemäße Verteilerstück und die zugehörige Zentrierplatte gewährleisten mehrfache Zentrierungen.

Zunächst erfolgt eine Zentrierung des in die ungefüllte Form eingelegten Verteilerstücks über das auf diese aufgesteckte Zentrierstück. Dieses und somit auch die Verteilerscheibe werden beim Schließen der Form gegenüber dieser zentriert.

Beim Einfahren des Spritzkopfes erfolgt nochmals dessen Zentrierung in dem trichterförmigen Einführungsteil der Zentrierplatte.

Das ventilartige Verteilerstück ist innerhalb der Wandungen hinter dem beispielsweise die Rückwand eines Gehäuses bildenden Karton gleichsam schwimmend gelagert, so daß sich das Verteilerstück selbst gegenüber der Form zentrieren kann. Das Verteilerstück ist durch den tellerförmigen Dichtungsrand gegenüber der Innenseite der Kartonrückwand abgedichtet.

Planparallelitätsfehler werden durch die schwimmende Lagerung des Verteilerstücks sowie die Schwenkbarkeit des Spritzkopfes ausgeglichen. Dabei kann sich das Verteilerstück durch das ringförmige Schaumkunststoffteil beispielsweise aus Styropor auf der Innenwand oder Einbauteilen abstützen.

Eine zweite besonders bevorzugte Ausführungsform des ventilartigen Verteilerstücks, für das ebenfalls selbständiger Schutz beansprucht wird, zeichnet sich erfindungsgemäß dadurch aus, daß in einem etwa hutförmigen Gehäuse konzentrisch zu dessen Achse eine etwa napfförmige Mischkammer angeordnet ist, daß die Mischkammer in ihrer Wandung mit Durchtrittsöffnungen versehen ist, die in den Ringraum münden, der zwischen der etwa zylindrischen Außenwandung der Mischkammer und der etwa zylindrischen Innenwandung der Gehäuses gebildet ist, daß der flanschförmige Rand des Gehäuses auf gegenüberliegenden Seiten mit erhöhten Sockeln mit ebenen Stirnflächen versehen ist, die in ihrem mittleren Bereich Bohrungen und/oder dornartige Erhöhungen zur Befestigung an der Rückwand aufweisen, und daß die Bereiche des flanschförmigen Randes zwischen den Sockeln mit der plan auf den Stirnflächen der Sockel aufliegenden Rückwandung kreisbogenförmig gekrümmte Austrittsspalte bilden. Bei diesem Verteilerstück werden die Komponenten des zu mischenden Schaumkunststoffs mit - scharfem Strahl in die Mischkammer eingeschossen, so daß sich die Komponenten in dieser gut durchmischen. Die durchmischten Komponenten treten durch die Durchtrittsöffnungen in den Ringraum, der eine Entspannungs-oder Beruhigungskammer bildet, so daß der Schaumkunststoff dann aus den schlitzförmigen Austrittsspalten mit im wesentlichen laminarer Strömung austritt.

Um die Taktzeiten bei der Herstellung zu verkürzen und um bessere Qualitäten des ausgeschäumten Schaumkunststoffes zu erhalten, ist es ein Bestreben, in kurzer Zeit abbindende Schaumkunststoffe zu verwenden. Bei den gegenwärtig verwendeten Verfahren liegen die Abbindzeiten des Schaumkunststoffs im Bereich von etwa 70 Sekunden. Das erfindungsgemäße Verfahren ermöglicht -

insbesondere bei Verwendung des erfindungsgemäßen Verteilerstücks den Einsatz von Schaumkunststoff mit Abbindzeiten von etwa 40 Sekunden und von Schaumkunststoffen mit darunter liegenden Abbindzeiten. Kürzere Abbindzeiten des Schaumkunststoffs führen zu einer feinzelligeren Struktur des Schaums und damit zu günstigeren Wärmedurchgangswerten. Da sich nach dem erfindungsgemäßen Verfahren und mit dem erfindungsgemäßen Verteilerstück die benötigten Mengen des Schaumkunststoffes in sehr kurzen Zeiten einspritzen lassen, können Schaumkunststoffe mit kurzen Abbindzeiten verwendet werden. Die kurzen Einspritzzeiten ergeben sich nach dem erfindungsgemäßen Verfahren unter Verwendung der erfindungsgemäßen Verteilerstücke daraus, daß der Kunststoffschaum mit im wesentlichen laminarer Strömung aus den Austrittsspalten der Verteilerstücke austritt und mit kurzen Strömungswegen den Hohlraum völlig ausfüllt. Da der Hohlraum mit im wesentlichen laminarer Strömung des Kunststoffschaums aufsteigend gefüllt wird, sind Lufteinschlüsse in dem Schaumkunststoff weitgehend ausgeschlossen. Da sich der eingespritzte Schaumkunststoff von dem Verteilerstück gleichmäßig ausbreitet und mit im wesentlichen gleichlangen Fließwegen in die Hohlräume der Seitenwandungen aufsteigt, werden Lunkerbildungen verhindert oder auf ein Mindestmaß reduziert.

Die Austrittsspalte des Verteilerstücks sind zwischen den Ausnehmungen des flanschförmigen Randes und der überdeckenden Rückwandung gebildet. Die beispielsweise aus Karton bestehende Rückwand ist durch Befestigungsschrauben oder Stifte mit dem flanschförmigen Rand des Verteilerstückes verbunden.

Nach einer vorteilhaften Ausgestaltung ist vorgesehen, daß die Dicken der Austrittsspalte durch entsprechende Profilierung des flanschförmigen Randes über deren Längen entsprechend den Längen der Fließwege und/oder den Austrittsmengen des Schaumkunststoffes unterschiedlich sind. Durch diese Profilierung der Austrittsspalte über ihre Längen lassen sich deren Stärken den jeweiligen Fließwegen und benötigten Mengen des Schaumkunststoffs in der Weise anpassen, daß längere Fließwege in gleichen Zweiten zurückgelegt werden und größere Mengen in gleichen Zeiten transportiert werden. Durch entsprechende Wahl des Profils der Austrittsspalte kann für jeden Anwendungsfall die optimale Füllzeit erreicht werden. Der Schaumkunststoff wird durch einen nahezu rundum verlaufenden schlitzförmigen Spalt eingespeist, so daß Teilströme vermieden werden, die sich unter Lufteinschluß und Lunkerbildung wieder vereinigen könnten. Da der eingespritzte Schaumkunststoff in homogener Weise durchmischt ist und mit im wesentlichen laminarer Strömung aus dem Verteilerstück austritt, wird eine turbulenzfreie, sich gleichmäßig ausbreitende und aufsteigende Füllung der Hohlräume in kürzester Zeit auch dann erreicht, wenn unterschiedlich große Räume mit Schaumkunststoff zu füllen sind. Derartige unterschiedlich große Hohlräume ergeben sich beispielsweise aus benötigten stärkeren Isolierungen, die beispielsweise das Gefrierfach eines Kühlschrankes einfassen.

Der flanschförmige Rand des Gehäuses kann in den Hauptausflußrichtungen mit radialen nutförmigen Kanälen versehen sein, die über Stufen zu den anschließenden Austrittsspalten geringerer Dicke übergehen. Wandseitig können die Austrittsspalte auch durch ein kurvenförmiges Profil begrenzt sein, bei dem also die Übergänge fließend sind.

Die Durchtrittsöffnungen der Mischkammer können rund, oval, oder schlitzförmig sein.

Die Stützsockel für die Rückwandung können seitlich die Austrittsspalte durch abgerundete Flanken begrenzen, die die durch diese geteilten Ströme kurz hinter den Sockeln wieder zusammenführen.

Der die Rückwand bildende Karton wird durch den Spritzstrahl der Düse des Füllkopfes durchbohrt. Der Spritzstrahl tritt mit einem so großen Druck aus, daß sich nur ein kleines Durchgangsloch ausbildet, das sich nach Beendigung des Einspritzvorganges grundsätzlich von selbst durch einen kleinen Rest zurückfließenden Kunststoffes dichtet. Weiterhin wird der Schaumdruck, der sich im Innern aufbaut, stark durch die labyrinthartige Führung in der Mischkammer gedrosselt, so daß auf das kleine Einspritzloch nur noch ein sehr kleiner Druck wirkt, der grundsätzlich gerade ausreicht, um einen dichtenden Pfropfen zu bilden.

Zusätzlich kann die Mischkammer noch durch einen Deckel aus einem elastischen und/oder plastischem Kunststoff mit mittlerem Kreuzschlitz geschlossen sein. Dieser öffnet sich durch den Spritzstrahl und schließt sich anschließend ähnlich einem Rückschlagventil. Die Schließwirkung kann zusätzlich noch dadurch verbessert werden, daß der Deckel kalottenartig in die Mischkammer hineingewölbt ist.

Nach einer weiteren Ausgestaltung ist vorgesehen, daß das Verteilerstück mit einer im wesentlichen rechteckigen Zentrierplatte verschraubbar ist, die auf ihrer Oberseite eine konische trichterförmige Einführungsöffnung für die Düse des Spritzkopfes aufweist und die auf gegenüberliegenden Seiten angrenzend an die Einführungsöffnung Stege aufweist, die an ihren Seiten symmetrisch zur Längsmittellinie sich keilförmig verengende Zentriernuten aufweist. In die Zentrierplatte greifen die Gegenzentrierplatten der Schließlade ein, die halbrundförmige Ausnehmungen und an diese anschließend keilförmige Kanten aufweist. Die halbrundförmigen Ausnehmungen schließen die zylinderschalenförmigen Teile der Einführöffnung ein, während die keilförmigen Kanten in die Zentriernuten der Zentrierplatte eingreifen, so daß die Zentrierplatte in ihrer Lage zu der Schließlade in allen Richtungen zentriert wird. Die Zentriernuten der Zentrierplatte lassen nicht nur eine Zentrierung in Querrichtung, sondern auch in Richtung der Längsmittellinie zu.

Weiterhin bewirkt die keilförmige Ausgestaltung der Zentriernuten auch eine Ausrichtung der Zentrierplatte und infolgedessen auch der mit dieser verbundenen Rückwand in der Tiefe. Die Zentrierplatte wird also durch die halbrundförmigen Ausnehmungen mit den anschließenden keilförmigen Kanten der Gegenzentrierplatte in allen Raumrichtungen zentriert.

Zweckmäßigerweise ist das Gehäuse des Verteilerstücks auf seiner Rückseite mit einem Schaumstoffblock o.dgl. veränderbarer Höhe verbunden. Durch diesen Schaumstoffblock läßt sich das Gehäuse auf eine Höhe einstellen, daß beim Schließen der Schließladen die Gegenzentrierplatten mit ihren keilförmigen Kanten in die keilförmigen Nuten beidseits der etwa prismatischen Zentrierkörper der Zentrierplatte eingreifen können.

Ausführungsbeispiele der Erfindung werden nachstehend anhand der Zeichnung näher erläutert. In dieser zeigt

Fig. 1 einen Längsschnitt durch eine erste Ausführungsform eines Verteilerstücks mit aufgesetzter Zentrierplatte und in diese eingeführtem Spritzkopf,

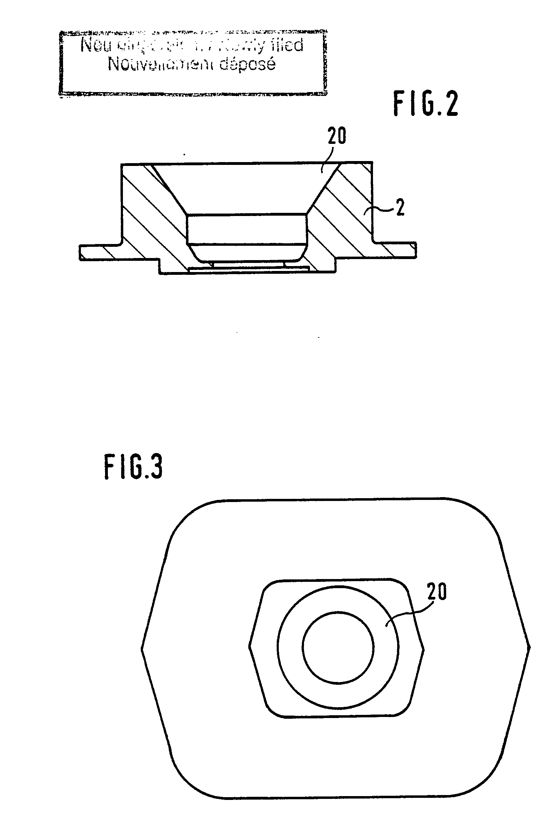

Fig. 2 einen Längsschnitt durch die Zentrierplatte nach Fig.1,

Fig. 3 eine Draufsicht auf die Zentrierplatte,

Fig.4 eine Rückansicht einer zweiten Ausführungsform eines Verteilerstücks,

Fig.5 einen Schnitt durch das Verteilerstück längs der Linie V-V in Fig.4,

Fig.6 eine Draufsicht auf das Verteilerstück nach Fig.4,

Fig.7 einen Schnitt durch das Verteilerstück längs der Linie VII-VII in Fig.6

Fig.8 eine Rückansicht der zweiten Ausführungsform einer Zentrierplatte,

Fig.9 eine Draufsicht auf die Zentrierplatte nach Fig.8,

Fig.10 eine Seitenansicht der Zentrierplatte in Richtung des Pfeils X in Fig.8,

Fig.11 eine Seitenansicht der Zentrierplatte in Richtung des Pfeils Y in Fig.8,

Fig.12 einen Schnitt durch die Zentrierplatte gemäß der Linie A-A in Fig.8

Fig.13 einen Schnitt durch die Zentrierplatte längs der Linie B-B in Fig.9 und

Fig.14 eine Seitenansicht der Zentrierplatte in Richtung des Pfeils Z in Fig.9

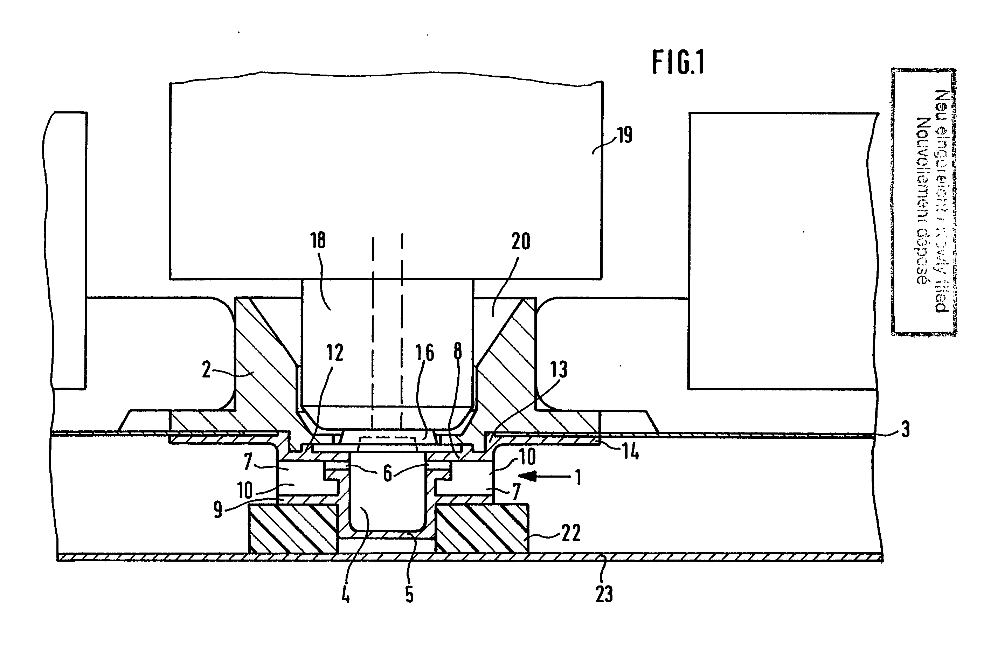

Fig.1 zeigt das Verteilerstück 1 mit auf dieses aufgesetzter Zentrierplatte 2 im Längsschnitt, wobei das Verteilerstück 1 in Füllstellung in eine Öffnung eines die Rückwand eines Gefrier-oder Kühlgerätegehäuses bildenden Kartonzuschnitt 3 eingesetzt ist.

Das Verteilerstück 1 besteht aus einer zentralen zylindrischen Kammer 4, die durch einen Boden 5 geschlossen ist. Die Kammer ist in ihrem oberen Randbereich kreuzweise mit sich über ihren Umfang erstreckenden Austrittschlitzen 6 versehen, die sich jeweils etwa über ein Viertel des Umfangs der Mischkammer 4 erstrecken. Die Austrittschlitze münden in sich im Horizontalschnitt etwa düsenförmig erweiternde Austrittsöffnungen 7. Diese sind zwischen zueinander parallelen Platten 8, 9 gebildet, die an der Mischkammer 4 befestigt sind. Die Platten 8, 9 sind quadratisch und zwischen den Austrittschlitzen 6 durch auf deren Diagonalen verlaufende Stege 10 voneinander getrennt.

Auf seiner Oberseite ist das Verteilerstück mit einem umlaufenden ringförmigen Steg 12 versehen, der die Mischkammer 4 konzen-trisch umgibt. Dieser umlaufende konzentrische Steg 12 liegt in einer Vertiefung, die von einem in Draufsicht etwa rechteckigen Rand 13 eingefaßt ist. Dieser Rand 13 ist von einem tellerförmigen Flansch 14 umgeben, der sich in dem dargestellten Schnitt auf der Innenseite des Kartonzuschnitts 3 abstützt.

In der kreisringförmigen umlaufenden Wulst 12 ist eine hutförmige Dichtungsscheibe 16 aus elastomerem Material gehalten. Diese ist in nicht dargestellter Weise in ihrem mittleren Bereich mit einem gekreuzten Schlitz versehen.

In der Vertiefung mit dem umlaufenden stegförmigen Rand 13 ist die aufgesetzte Zentrierplatte 2 gehaltert. Diese ist mit einer zentralen Öffnung versehen, in die die Düse 18 des Spritzkopfes 19 greift. Die Öffnung ist mit einem äußeren, sich trichterförmig erweiternden Bereich 20 versehen, der der Zentrierung des Düsenteils 18 des Spritzkopfes 19 dient.

Auf den die untere Platte 9 überragenden Teil der Mischkammer 4 ist ein elastischer Ring 22 aus Styropor aufgeschoben, über den sich das Verteilerstück elastisch auf der Innenwandung 23 des Gehäuses abstützt.

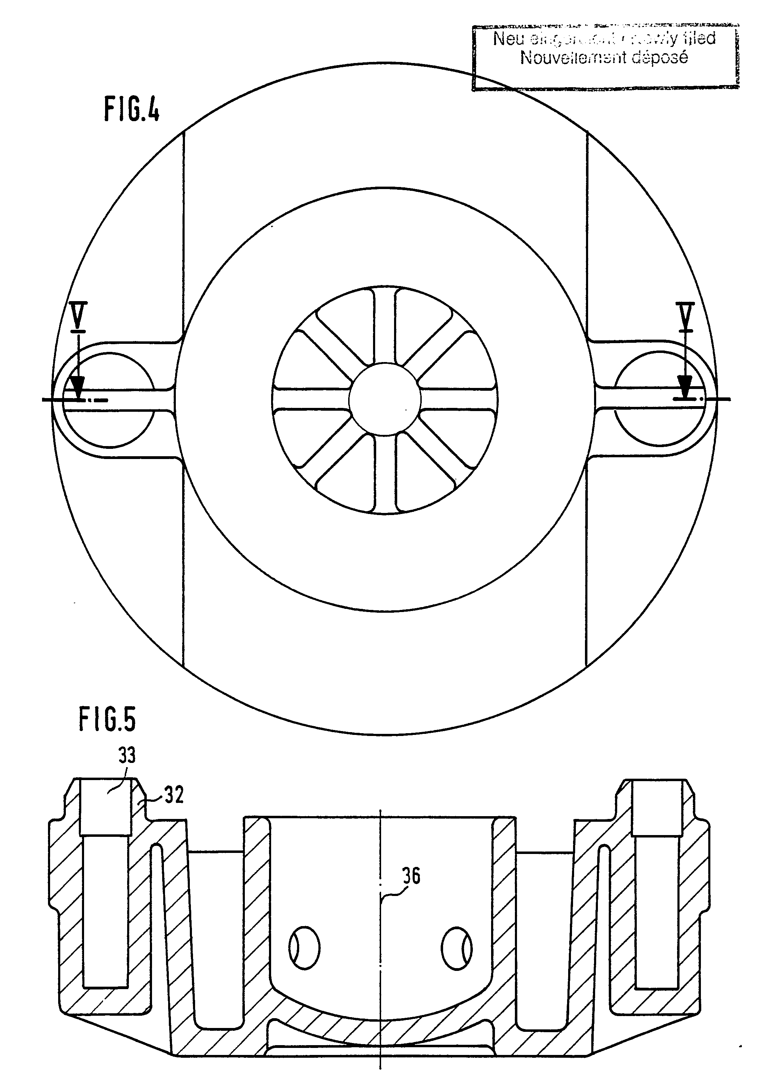

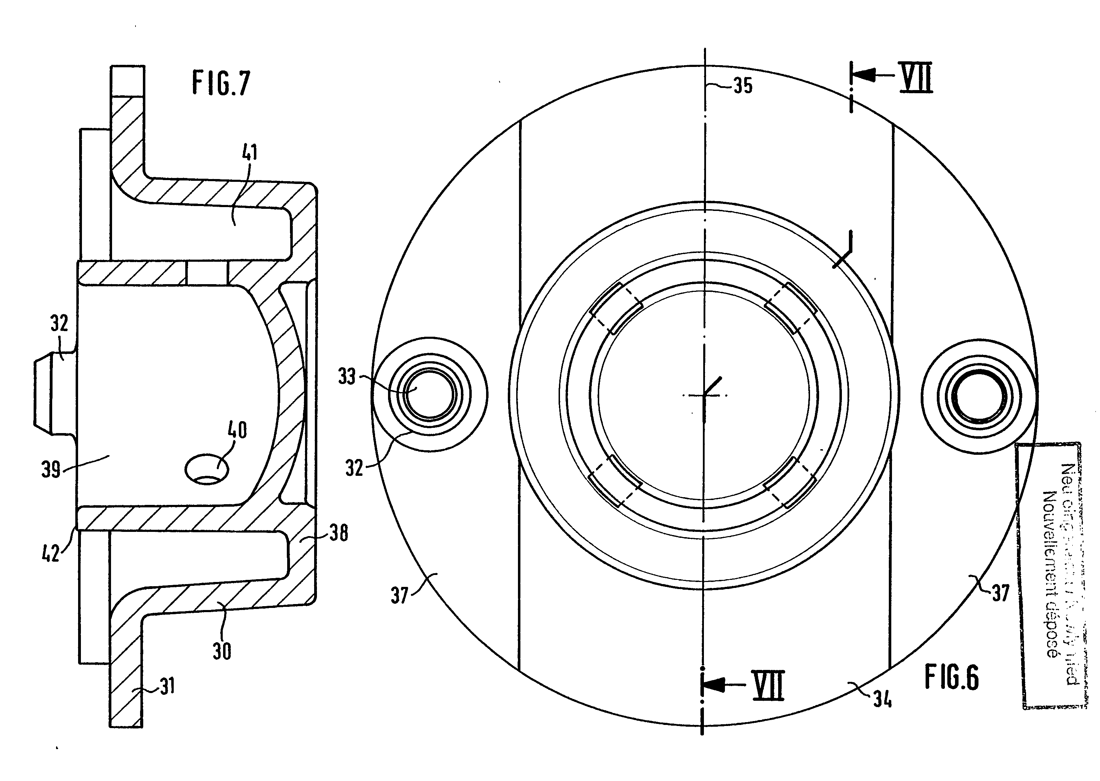

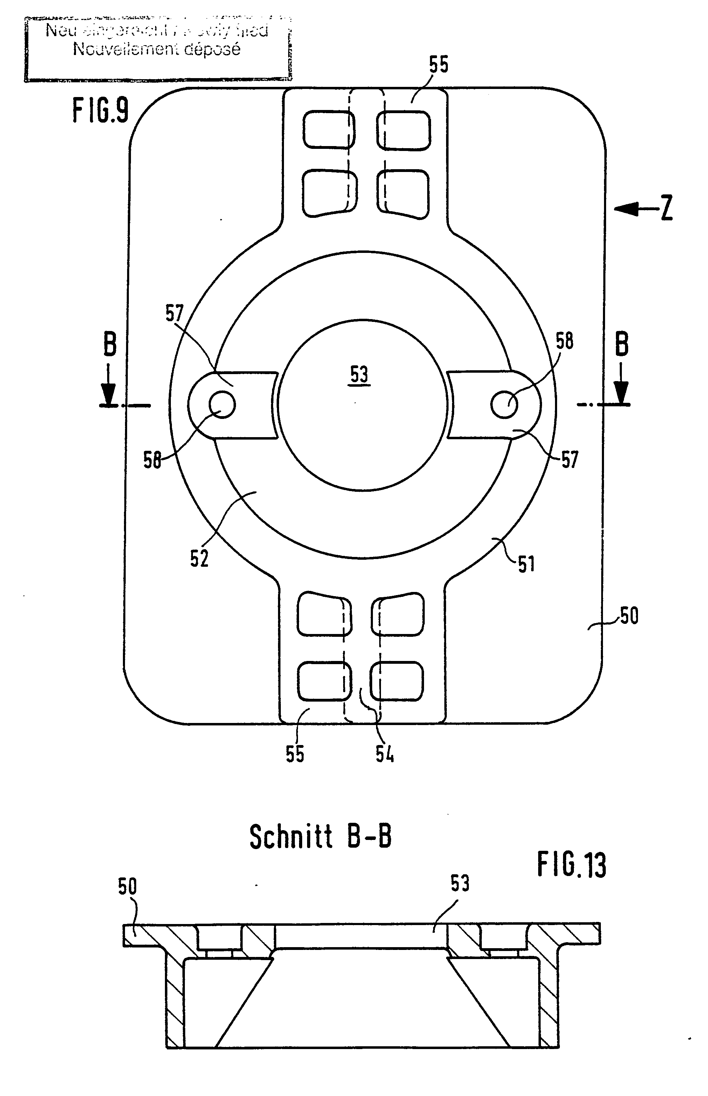

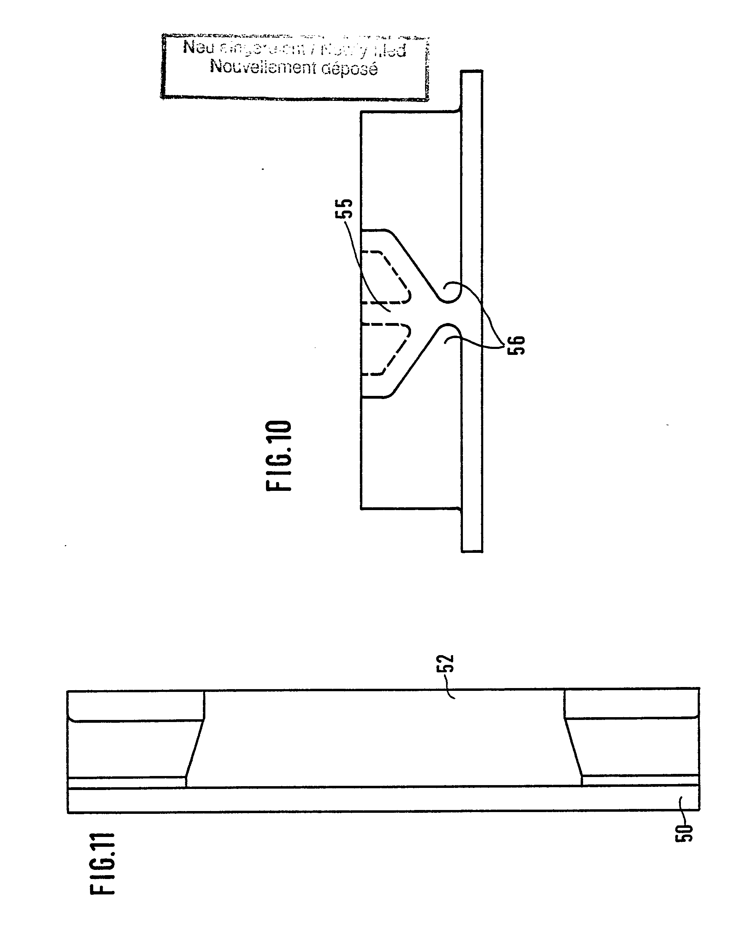

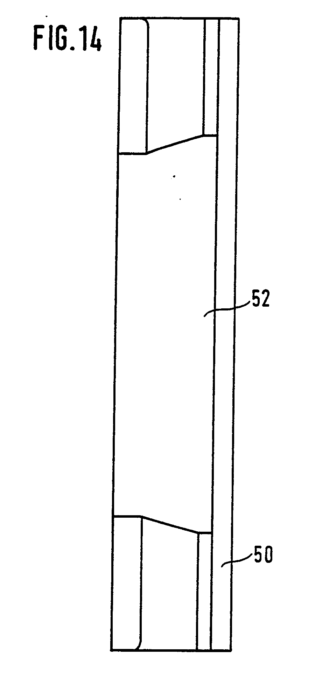

Eine zweite Ausführungsform eines ventilartigen Verteilerstücks mit zugehöriger Zentrierplatte wird nachstehed anhand der Fig.4-14 erläutert.

Das Verteilerstück besteht aus einem hutförmigen Gehäuse mit zylindrischer oder sich leicht konusförmig zu seinem Boden hin verengender Umfangswandung 30, deren oberer Öffnungsrand flanschförmig verbreitert ist. Die flanschförmige Verbreiterung besteht aus dem einstückig an dem oberen Rand angesetzten Ring 31. Auf gegenüberliegenden Seiten ist der flanschförmige Ring 31 mit sockelartigen Erhöhungen 32 versehen, die in ihrem mittleren Bereich mit Bohrungen 33 versehen sind. Der flanschförmige Rand 31 ist mit einer sich über die Bereiche gegenüberliegender Seiten erstreckenden nutförmigen Ausnehmung 34 versehen, deren Mittellinie 35 durch die Gehäuseachse 36 verläuft. Über Stufen schließen sich die kreisabschnittförmigen Randbereiche 37 an, in denen die erhöhten sockelartigen Teile 32 liegen.

Einstückig mit dem Boden 38 des Gehäuses des Verteilerstücks ist die napfartige Mischkammer 39 verbunden, die konzentrisch zur Gehäuseachse 36 und damit konzentrisch zu der zylindrischen oder konusförmigen Gehäusewandung 30 angeordnet ist. Die Mischkammer 39 ist in ihren Wandungen mit mehreren Bohrungen 40 versehen, die in den Ringraum 41 zwischen den Wandungen des Gehäuses und der Mischkammer münden. Die Stirnfläche 42 des oberen Randes der Mischkammer 39 liegt mit den Stirnflächen der sockelartigen Erhöhungen 32 etwa auf einer Ebene.

Das Verteilerstück besteht zweckmäßigerweise aus einem Kunststoffspritzgußteil.

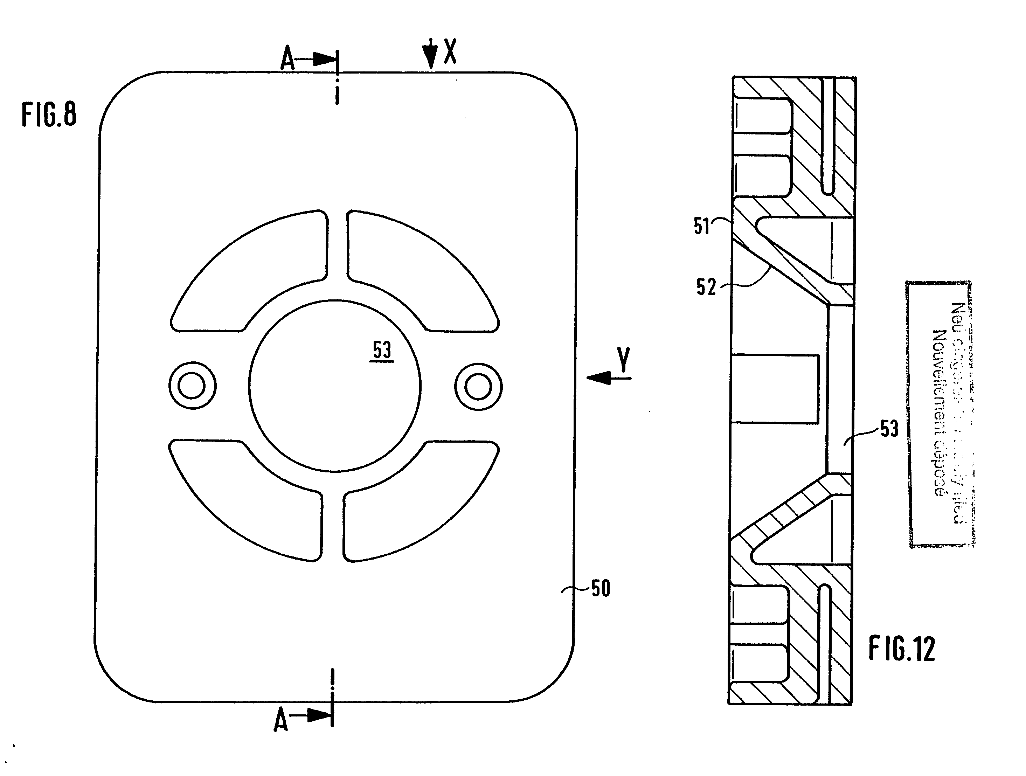

Die in den Fig. 8-14 dargestellte Zentrierscheibe besteht aus einer rechteckigen Basisplatte 50 mit abgerundeten Ecken. Auf der Oberseite dieser Platte ist eine zylindrische Erhöhung 51 vorgesehen, die mit einer konusförmigen Trichteröffnung 52 versehen ist, die in eine kreisrunde Durchgangsbohrung 53 der Basisplatte 50 mündet. Symmetrisch zur Längsmittellinie sind beidseits des Trichterteils 51, 52 Verlängerungsstege 55 vorgesehen, die auf ihren beiden Seiten mit etwa keilförmigen Nuten 56 versehen sind. Der konusförmige Trichterteil 52 ist auf gegenüberliegenden Seiten mit Aussparungen 57 versehen, in deren Grund Bohrungen 58 vorgesehen sind, die nach Aufsetzen der Zentrierplatte unter Zwischenlage der Gehäuserückwad auf das Verteilerstück mit den Bohrungen 33 des Verteilerstücks fluchten.

## Ansprüche

1. Verfahren zum Ausschäumen des glockenförmigen Hohlraums zwischen Behälteraußen-und Behälterinnenwandungen o.dgl., vorzugsweise des Hohlraums zwischen den Innenwandungen und den Außenwandungen von Kühl-und/oder Gefriergeräten, mit einem Kunststoffschaum, vorzugsweise Polyurethanschaum, bei dem die Innenwandung auf den Kern eines Formkastens gestülpt wird, die Außenwandungen in den Formkasten eingelegt und zueinander und zu der Innenwandung ausgerichtet werden und der Formkasten geschlossen wird und bei dem die Komponenten des ausschäumenden Kunststoffs durch mindestens eine verschließbare Öffnung in den äußeren Wandungsteilen in den Hohlraum eingespritzt und der sich bildende Schaum ausgehärtet wird,

**dadurch gekennzeichnet,**

daß vor dem Schließen des Formkastens in den Hohlraum zwischen die Innen-und Außenwandungen ein ventilartiges Verteilerstück derart eingelegt wird, daß es mit seiner Rückseite auf der Innenwandung abgestützt ist und mit seinem Einfüllteil in einer Öffnung im mittleren Bereich der plattenförmigen äußeren Rückwandung liegt, und daß der Formkasten vor dem Einfüllen der Komponenten des ausschäumenden Kunststoffs so gewendet wird, daß die Rückwandung mit dem Einfüllteil unten liegt und der Kunststoffschaum sich aufsteigend ausbildet.

2. Ventilartiges Verteilerstück, insbesondere zur Durchführung des Verfahrens nach Anspruch 1, gekennzeichnet durch eine napfförmige Mischkammer mit tellerförmigem Dichtungsrand, die in ihrem Randbereich unterhalb des Dichtungsrandes mit mehreren über den Umfang ihrer Wandung verteilten Austrittsschlitzen versehen ist.

3. Verteilerstück nach Anspruch 2, dadurch gekennzeichnet, daß die Austrittschlitze auf der Außenseite der Wandung der Mischkammer durch im wesentlichen radiale Leitplatten begrenzt und zwischen diesen durch radiale Stege voneinander getrennt sind, die im auf die Mischkammer bezogenen Radialschnitt sich dreieckförmig erweiternde Austrittsdüsen begrenzen.

4. Verteilerstück nach Anspruch 2 oder 3, dadurch gekennzeichnet, daß die Leitplatten parallel zueinander angeordnet sind.

5. Verteilerstück nach einem der Ansprüche 2 bis 4, dadurch gekennzeichnet, daß die Leitplatten rechteckig oder quadratisch ausgebildet sind und die Stege auf deren Diagonalen zwischen diesen verlaufen.

6. Verteilerstück nach einem der Ansprüche 2 bis 5, dadurch gekennzeichnet, daß die Umfangsschlitze unterschiedliche Breiten und/oder Längen aufweisen.

7. Verteilerstück nach einem der Ansprüche 2 bis 6, dadurch gekennzeichnet, daß der Dichtungsrand nach außen gewölbt ist oder die Form eines flachen Konus aufweist.

8. Verteilerstück nach einem der Ansprüche 2 bis 7, dadurch gekennzeichnet, daß die Mischkammer zylindrisch ausgebildet ist.

9. Verteilerstück nach einem der Ansprüche 2 bis 8, dadurch gekennzeichnet, daß die Öffnungsseite der Mischkammer im Abstand von einem stegartigen Rand umgeben ist, in dem eine Dichtungsscheibe aus elastomerem Material mit einem mittleren Schlitz oder Kreuzschlitz gehalten ist.

10. Verteilerstück nach einem der Ansprüche 2 bis 9, dadurch gekennzeichnet, daß die Dichtungsscheibe im Querschnitt hutförmig ist.

11. Verteilerstück nach einem der Ansprüche 2 bis 10, dadurch gekennzeichnet, daß der stegartige Rand in einer Vertiefung liegt und/oder im Abstand von einem weiteren stegartigen Rand umgeben ist, die der Halterung einer Zentrierplatte dienen, die auf ihrer einen Seite mit einem zu der Vertiefung und/oder dem Rand im wesentlichen komplementären Paßstück und auf ihrer anderen Seite mit einer dem Düsenteil des Mischkopfes angepaßten Ausnehmung mit zentraler mit der Mischkammer fluchtender Durchtrittsöffnung versehen ist, die von einer trichterförmigen Verbreiterung umgeben ist.

12. Verteilerstück nach Anspruch 11, dadurch gekennzeichnet, daß die Zentrierplatte auf ihrer Außenseite innerhalb des Paßstücks mit einer Aussparung zur Aufnahme der Dichtscheibe versehen ist.

13. Verteilerstück nach Anspruch 11 oder 12, dadurch gekennzeichnet, daß die Mischplatte abgeschrägte oder abgerundete Außenseiten, beispielsweise einen sechseckigen Querschnitt, aufweist.

14. Verteilerstück nach einem der Ansprüche 2 bis 13, dadurch gekennzeichnet, daß ein ringförmiges Schaumkunststoffteil mit zentraler Ausnehmung auf die Außenseite der Mischkammer des Verteilerstücks aufgeschoben ist und daß die Dicke des Schaumkunststoffteils größer ist als die Höhe des die Rückseite des Verteilerstücks überragenden Teils der Mischkammer.

15. Verteilerstück nach einem der Ansprüche 2 bis 14, dadurch gekennzeichnet, daß das Verteilerstück und/oder die Zentrierplatte aus einem Kunststoffspritzgußteil bestehen.

Geänderte Patentansprüche gemäss Regel 86(2) EPÜ.

1. Verfahren zum Ausschäumen des Hohlraums in den Wänden von wannenförmigen Behältern, der zwischen Behälteraußen- und Behälterinnenwandungen gebildet ist, vorzugsweise des Hohlraums zwischen den Innenwandungen und den Außenwandungen von Kühl- und/oder Gefriergeräten, mit einem Kunststoffschaum, vorzugsweise Polyurethanschaum, bei dem die Innenwandung auf den Kern eines Formkastens gestülpt wird, die Außenwandungen in den Formkasten eingelegt und zueinander und zu der Innenwandung ausgerichtet werden und der Formkasten geschlossen wird und bei dem die Komponenten des ausschäumenden Kunststoffs durch mindestens eine verschließbare Öffnung in den äußeren Wandungsteilen in den Höhlraum eingespritzt werden und der sich bildende Schaum ausgehärtet wird,

**dadurch gekennzeichnet,**

daß vor dem Schließen des Formkastens in den Hohlraum zwischen die Innen- und Außenwandungen ein ventilartiges Verteilerstück, aus dessen Austrittsspalten die gemischten Komponenten des Schaumkunststoffs mit im wesentlichen laminarer Strömung austreten, derart eingelegt wird, daß es mit seiner Rückseite auf der Innenwandung abgestützt ist und mit seinem Einfüllteil in einer Öffnung im mittleren Bereich der plattenförmigen äußeren Rückwandung liegt, und daß der Formkasten vor dem Einfüllen der Komponenten des ausschäumenden Kunststoffs so gewendet wird, daß die Rückwandung mit dem Einfüllteil unten liegt und der Kunststoffschaum nach seiner Ausbreitung über den etwas horizontal liegenden Holraum der Rückwand sich aufsteigend auch über die Hohlräume der Seitenwände ausbildet.

2. Ventilartiges Verteilerstück, insbesondere zur Durchführung des Verfahrens nach Anspruch 1, gekennzeichnet durch eine napfförmige Mischkammer mit tellerförmigem Dichtungsrand, die in ihrem Randbereich unterhalb des Dichtungsrandes mit mehreren über den Umfang ihrer Wandung verteilten Austrittsschlitzen versehen ist.

3. Verteilerstück nach Anspruch 2, dadurch gekennzeichnet, daß die Austrittschlitze auf der Außenseite der Wandung der Mischkammer durch im wesentlichen radiale Leitplatten begrenzt und zwischen diesen durch radiale Stege voneinander getrennt sind, die im auf die Mischkammer bezogenen Radialschnitt sich dreieckförmig erweiternde Austrittsdüsen begrenzen.

4. Verteilerstück nach Anspruch 2 oder 3, dadurch gekennzeichnet, daß die Leitplatten parallel zueinander angeordnet sind.

5. Verteilerstück nach einem der Ansprüche 2 bis 4, dadurch gekennzeichnet, daß die Leitplatten rechteckig oder quadratisch ausgebildet sind und die Stege auf deren Diagonalen zwischen diesen verlaufen.

6. Verteilerstück nach einem der Ansprüche 2 bis 5, dadurch gekennzeichnet, daß die Umfangsschlitze unterschiedliche Breiten und/oder Längen aufweisen.

7. Verteilerstück nach einem der Ansprüche 2 bis 6, dadurch gekennzeichnet, daß der Dichtungsrand nach außen gewölbt ist oder die Form eines flachen Konus aufweist.

8. Verteilerstück nach einem der Ansprüche 2 bis 7, dadurch gekennzeichnet, daß die Mischkammer zylindrisch ausgebildet ist.

9. Verteilerstück nach einem der Ansprüche 2 bis 8, dadurch gekennzeichnet, daß die Öffnungsseite der Mischkammer im Abstand von einem stegartigen Rand umgeben ist, in dem eine Dichtungsscheibe aus elastomerem Material mit einem mittleren Schlitz oder Kreuzschlitz gehaltert ist.

10. Verteilerstück nach einem der Ansprüche 2 bis 9, dadurch gekennzeichnet, daß die Dichtungsscheibe im Querschnitt hutförmig ist.

11. Verteilerstück nach einem der Ansprüche 2 bis 10, dadurch gekennzeichnet, daß der stegartige Rand in einer Vertiefung liegt und/oder im Abstand von einem weiteren stegartigen Rand umgeben ist, die der Halterung einer Zentrierplatte dienen, die auf ihrer einen Seite mit einem zu der Vertiefung und/oder dem Rand im wesentlichen komplementären Paßstück und auf ihrer anderen Seite mit einer dem Düsenteil des Mischkopfes angepaßten Ausnehmung mit zentraler mit der Mischkammer fluchtender Durchtrittsöffnung versehen ist, die von einer trichterförmigen Verbreiterung umgeben ist.

12. Verteilerstück nach Anspruch 11, dadurch gekennzeichnet, daß die Zentrierplatte auf ihrer Außenseite innerhalb des Paßstücks mit einer Aussparung zur Aufnahme der Dichtscheibe versehen ist.

13. Verteilerstück nach Anspruch 11 oder 12, dadurch gekennzeichnet, daß die Mischplatte abgeschrägte oder abgerundete Außenseiten, beispielsweise einen sechseckigen Querschnitt, aufweist.

14. Verteilerstück nach einem der Ansprüche 2 bis 13, dadurch gekennzeichnet, daß ein ringförmiges Schaumkunststoffteil mit zentraler Ausnehmung auf die Außenseite der Mischkammer des Verteilerstücks aufgeschoben ist und daß die Dicke des Schaumkunststoffteils größer ist als die Höhe des die Rückseite des Verteilerstücks überragenden Teils der Mischkammer.

15. Verteilerstück nach einem der Ansprüche 2 bis 14, dadurch gekennzeichnet, daß das Verteilerstück und/oder die Zentrierplatte aus einem Kunststoffspritzgußteil bestehen.

16. Ventilartiges Verteilerstück, insbesondere zur Durchführung des Verfahrens nach Anspruch 1, dadurch gekennzeichnet, daß in einem etwa hutförmigen Gehäuse konzentrisch zu dessen Achse eine etwa napfförmige Mischkammer angeordnet ist, daß die Mischkammer in ihrer Wandung mit Durchtrittsöffnungen versehen ist, die in den Ringraum münden, der zwischen der etwa zylindrischen oder konusförmigen Außenwandung der Mischkammer und der etwa zylindrischen oder konusförmigen Innenwand des Gehäuses gebildet ist,

daß der flanschförmige Rand des Gehäuses auf gegenüberliegenden Seiten mit erhöhten Sockeln und ebenen Stirnflächen versehen ist, die in ihrem mittleren Bereich Bohrungen und/oder dornartige Erhöhungen zur Befestigung an der Rückwandung aufweisen, und

Daß die Bereiche des flanschförmigen Randes zwischen den Sockeln mit der plan auf den Stirnflächen der Sockel aufliegenden Rückwandung kreisbogenförmig gekrümmte Austrittsspalte bilden.

17. Verteilerstück nach Anspruch 16, dadurch gekennzeichnet, daß die Dicken der Austrittsspalte in achsialer Richtung des Verteilerstücks durch entsprechende Profilierung des flanschförmigen Randes über deren Längen entsprechend den Längen der Fließwege und/oder den Austrittsmengen des Schaumkunststoffes unterschiedlich groß sind.

18. Verteilerstück nach Anspruch 16 oder 17, dadurch gekennzeichnet, daß der flanschförmige Rand in den Hauptausflußrichtungen mit radialen nutförmigen Kanälen versehen ist, die über Stufen zu den anschließenden Austrittsspalten geringerer Dicke übergehen.

19. Verteilerstück nach einem der Ansprüche 16-18, dadurch gekennzeichnet, daß randseitig die Austrittsspalte durch ein kurvenförmiges Profil begrenzt sind.

20. Verteilerstück nach einem der Ansprüche 16-19, dadurch gekennzeichnet, daß die Durchtrittsöffnungen der Mischkammer rund, oval oder - schlitzförmig sind.

21. Verteilerstück nach einem der Ansprüche 16-20, dadurch gekennzeichnet, daß die Sockel die Austrittsspalte durch abgerundete Flanken begrenzen, die die durch diese geteilten Ströme kurz hinter den Sockeln wieder zusammenführen.

22. Verteilerstück nach einem der Ansprüche 16-21, dadurch gekennzeichnet, daß die Mischkammer durch einen Deckel aus einem elastischen und/oder plastischem Kunststoff mit mittlerem Kreuzschlitz geschlossen ist.

23. Verteilerstück nach Anspruch 22, dadurch gekennzeichnet, daß der Deckel kalottenartig in die Mischkammer hineingewölbt ist.

24. Verteilerstück nach einem der Ansprüche 16-23, dadurch gekennzeichnet, daß das Gehäuse des Verteilerstücks auf seiner Rückseite mit einem Schaumkunststoffblock o.dgl. mit veränderlicher Höhe verbunden ist.

25. Verteilerstück nach einem der Ansprüche 16-24, dadurch gekennzeichnet, daß das Gehäuse unter Zwischenlage der Rückwandung mit einer im wesentlichen rechteckigen Zentrierplatte verschraubbar ist, die auf ihrer Oberseite eine konische trichterförmige Einführungsöffnung für die Düse des Spritzkopfes aufweist und die auf gegenüberliegenden seiten angrenzend an die Einführöffnung Stege aufweist, die an ihren Seiten symmetrisch zur Längsmittellinie mit sich keilförmig verengenden Zentriernuten versehen sind.

FIG.1

FIG.2

FIG.3

FIG.4

FIG.5

33

32

36

FIG.7

41

32

40

39

42

38

30

31

35

VII

33

32

37

37

34

VII

FIG.6

0 289 764

FIG.8

A → X

A →

53

Y ←

50

51

52

53

FIG.12

0 289 764

FIG.9

← Z

55

57

58

$\underline{53}$

58

57

B          B

52          51

55          54

50

Schnitt B-B

FIG.13

50          53

FIG.11

FIG.10

50 — 52 — 55 — 56

0 289 764

FIG.14

52

50